# EUROPÄISCHE PATENTSCHRIFT

(11) **EP 3 140 153 B1**
(45) Veröffentlichungstag und Bekanntmachung des Hinweises auf die Patenterteilung: **16.05.2018**
(21) Anmeldenummer: 15717406.1
(22) Anmeldetag: 10.03.2015
(51) Int. Cl.: B60N 2/02, B60N 2/06, B60N 2/22, B60N 2/48

(54) **SITZANORDNUNG MIT SITZPOSITIONSERKENNUNG UND MEMORY-FUNKTION**
SEAT ASSEMBLY WITH SEAT POSITION RECOGNIZING MEANS AND MEMORY FUNCTION
ENSEMBLE DE SIÈGE AVEC RECONNAISSANCE DE POSITION DU SIÈGE ET UNE FONCTION DE MÉMORISATION

(30) Priorität: 06.05.2014 DE 102014208383
(43) Veröffentlichungstag der Anmeldung: 15.03.2017
(73) Patentinhaber: Schaeffler Technologies AG & Co. KG, 91074 Herzogenaurach (DE)
(72) Erfinder: SCHAAF, Peter, 91468 Gutenstetten (DE); FUCHSHUBER, Thomas, 96172 Mühlhausen (DE); LANG, Johannes, 91097 Oberreichenbach (DE); HOCHMUTH, Harald, 91469 Hagenbüchach (DE)
(86) Internationale Anmeldenummer: PCT/DE2015/200133
(87) Internationale Veröffentlichungsnummer: WO 2015/169298

(56) Entgegenhaltungen:
- DE-A1- 4 333 892
- US-A1- 2011 043 010
- US-B1- 6 270 116

## Beschreibung

### Gebiet der Erfindung

Die Erfindung betrifft eine Sitzanordnung mit Sitzpositionserkennung und Memory-Funktion für ein Fahrzeug, umfassend einen Sitz, bestehend aus mehreren relativ zueinander beweglichen Sitzteilen, mit mindestens einer mechanischen Verstelleinrichtung zur manuellen Verstellung einer Sitzposition eines Benutzers in eine individuell an den Benutzer angepasste Sitzposition, ferner umfassend eine an die mindestens eine Verstelleinrichtung oder an dem jeweiligen Sitzteil angeordnete Messeinrichtung zur Ermittlung der eingestellten Sitzposition des jeweiligen Sitzteils.

Eine Sitzanordnung mit Sitzpositionserkennung und Memory-Funktion hat bekanntlich die Aufgabe, zumindest eine zuvor durch Sitzverstellung gefundene günstige Position zu speichern. Bekannt sich elektrisch bzw. elektronisch arbeitende Memory-Vorrichtung, die mehre optimale Sitzpositionen, also beispielsweise für unterschiedliche Fahrer, zu speichern und durch Knopfdruck einzustellen gestatten. Ferner sind auch mechanisch Memory-Vorrichtung bekannt geworden, die nur eine optimale Sitzposition zu speichern gestatten, also beispielsweise bei einem bestimmten Fahrer die Möglichkeit bieten, ohne erneute Justierung des Sitzes durch einfaches Bewegen desselben bis zu einer gespeicherten Raststellung die optimale Sitzposition wiederzufinden.

Aus der DE 43 33 892 A1 geht eine manuell betätigbare mechanische Memory-Vorrichtung zur Speicherung von zwei individuell programmierbaren Sitzpositionen, insbesondere Sitzlängspositionen, unter Verwendung von Reiter tragenden im Wesentlichen in Verstellrichtung verlaufenden Reiterschienen und von einem mit dem Reiter in Eingriff bringbaren und quer zur Reiterschiene beweglichen Anschlagselement, das Bestandteil einer Sucherprogrammiereinheit ist. Dabei sind entweder die Sucherprogrammiereinheit oder die Reiterschiene mit dem Sitzrahmen beweglich gekoppelt, während das jeweils andere Teil bezüglich des Fahrzeugbodens festgelegt ist. Das Anschlagselement kann bei Betätigung der Entriegelungsvorrichtung der Sitzverstellung aus einer neutralen Position in eine Anschlagsposition gebracht werden, in der das Anschlagselement mit einer einseitig wirkenden Anschlagsfläche eines Reiters bei Verstellung der Sitzposition in Kontakt treten kann und dadurch den Verstellvorgang in der eingeschlagenen Richtung beendet.

Ferner geht aus der DE 38 09 135 A1 eine Sitzanordnung für ein Fahrzeug mit einem einen Sitzrahmen enthaltenden Sitz, sitzrahmenfesten Gleitschienen, einer Sitzlängsverstelleinrichtung, die ferner am Fahrzeugboden gehaltene Stützschienen für die Gleitschienen sowie einen mittels eines Schwenkhebels aufhebbare Arretierung enthält, deren aktive Elemente in aufhebbarer formschlüssiger Verbindung stehende Zähne an dem Schienen sind, und mit einer mechanischen Memory-Vorrichtung zur Speicherung einer Sitzlängsposition. Die gleitschienenseitigen Zähne sind von einer zur Aufhebung eines unmittelbaren gegenseitigen formschlüssigen Eingriffs der den beiden Schienen zugeordneten Zähne mittels des Schwenkhebels entgegen einer Federkraft schwenkbaren, im Übrigen sitzfesten Arretierungswelle getragen. Die Memory-Vorrichtung enthält einen ebenfalls mit zumindest einem Zahn versehenen, reiterartig auf der Arretierwelle sitzenden Anschlag für einen der jeweiligen Stützschienen zugeordneten Gegenanschlag. Der Anschlag ist durch Schwenken in einer Richtung entgegen der Federkraft aus einer Memory-Position, in der sein Zahn im formschlüssigen Eingriff mit Zähnen der Arretierwelle steht, in eine Justierposition bewegbar, in der er auf der Arretierungswelle längs verschiebbar ist.

Aus der US2011/0043010A sind eine Sitzanordnung gemäss dem Oberbegriff des Anspruchs 1 und ein Verfahren gemäss dem Oberbegriff des Anspruchs 9 bekannt. Nachteilig an dem bekannten Stand der Technik ist die Beschränkung der Anzahl der abspeicherbaren Sitzpositionen auf zwei möglichen Sitzpositionen, sowie die relativ unkomfortable Einstellmöglichkeit der Sitzposition.

### Aufgabenstellung

Es ist die Aufgabe der vorliegenden Erfindung, eine Sitzanordnung mit manueller, mechanischer Verstelleinrichtung und Sitzpositionserkennung mit Memory-Funktion zu schaffen, die auf eine komfortable und schnelle Weise erlaubt, eine zuvor eingestellte individuell an einen jeweiligen Benutzer angepasste Sitzposition wiederzufinden. Ferner soll die Anzahl der abspeicherbaren Sitzpositionen nicht beschränkt sein.

### Erfindungsgemäße Lösung

Erfindungsgemäß weist die Messeinrichtung ein Senderelement zur kabellosen Übertragung der Sitzposition an ein damit verbundenes Empfängerelement auf, wobei das Empfängerelement die individuell an den Benutzer angepasste Sitzposition abspeichert und wiedererkennt. Mit anderen Worten ermittelt die an der mindestens einen Verstelleinrichtung oder an dem jeweiligen Sitzteil angeordnete Messeinrichtung die eingestellte Sitzposition des jeweiligen Sitzteils und überträgt diese über das Senderelement kabellos an das damit verbundene Empfängerelement, um die Sitzposition bei Bestätigung durch den Benutzer als individuell an den Benutzer angepasste Sitzposition im Empfängerelement abzuspeichern. Die Anzahl der abgespeicherten Sitzpositionen ist nicht beschränkt. Es ist denkbar das System für eine mechanische Verstelleinrichtung als Nachrüstbausatz bereitzustellen. Dieser besteht aus der Messeinrichtung mit Senderelement und dem Empfängerelement.

Vorzugsweise ist das Empfängerelement ein Smartphone. Es ist aber auch denkbar, dass das Empfängerelement ein Onboard-System des Fahrzeugs ist. Sowohl auf dem Smartphone als auch auf dem Onboard-System des Fahrzeugs ist zur Kommunikation mit dem Senderelement eine Software oder Applikation (App) installiert, die zumindest akustisch aber auch optisch eine komfortable und schnelle manuelle Einstellung der mechanischen Verstelleinrichtung erlaubt. Das jeweilige Empfängerelement ist besonders bevorzugt über Bluetooth oder Funk mit dem Senderelement koppelbar. Bei dem Abspeichern unterschiedlicher Sitzpositionen von unterschiedlichen Benutzern kann bei Erreichen der zuvor eingestellten Sitzposition ein akustisches Signal ausgegeben werden, wobei die akustischen Signale zur Unterscheidung des jeweiligen Benutzers unterschiedlich sind. Insbesondere ist eine unterschiedliche Anzahl von akustischen Signalen denkbar. Ergänzend oder ausschließlich können die zuvor abgespeicherten Sitzpositionen optisch auf einem Display des Empfängerelements angezeigt werden. Dadurch wird die Einstellung einer zuvor abgespeicherten Sitzposition noch komfortabler, da die aktuelle Sitzposition in Echtzeit angezeigt wird.

Sobald die Verstelleinrichtung durch den Benutzer betätigt wird beginnt die Kommunikation zwischen dem Senderelement und dem Empfängerelement. Beim Erreichen der zuvor abgespeicherten individuell an den Benutzer angepassten Sitzposition wird ein akustisches Signal ausgegeben.

Vorzugsweise umfasst die Messeinrichtung ein Schieberpotentiometer zur Ermittlung einer linearen Bewegung zwischen der Messeinrichtung und einer Zahnstange. Gemäß einem weiteren Ausführungsbeispiel umfasst die Messeinrichtung ein Drehpotentiometer zur Ermittlung einer Drehbewegung zwischen der Messeinrichtung und einem Zahnsegment. Es ist aber auch denkbar, dass die Messeinrichtung ein Mehrgangpotentiometer zur Ermittlung einer Rotation umfasst. Das Potentiometer ist ein elektrisches Widerstandsbauelement, dessen Widerstandswerte mechanisch durch eine Drehbewegung oder eine lineare Bewegung veränderbar sind.

Gemäß einem weiteren bevorzugten Ausführungsbeispiel umfasst die Messeinrichtung mindestens einen optischen Sensor zur Ermittlung einer linearen Bewegung zwischen der Messeinrichtung und einer Zahnstange oder zur Ermittlung einer Drehbewegung zwischen der Messeinrichtung und einem Zahnsegment. Hierzu ist insbesondere eine Lichtquelle mit Fotodiode und Inkrementalscheibe oder Messlineal geeignet.

### Kurzbeschreibung der Zeichnung

Weitere Einzelheiten und Merkmale der Erfindung ergeben sich aus der nachfolgenden Beschreibung in Verbindung mit den Zeichnungen. Dabei zeigt
- Figur 1: eine schematische Darstellung zur Veranschaulichung einer erfindungsgemäßen Sitzanordnung mit Sitzpositionserkennung und Memory-Funktion,
- Figur 2: eine vereinfachte schematische Darstellung einer erfindungsgemäßen Messeinrichtung mit einem Schieberpotentiometer,
- Figur 3: eine vereinfachte schematische Darstellung einer erfindungsgemäßen Messeinrichtung mit einem Drehpotentiometer,
- Figur 4: eine vereinfachte schematische Darstellung einer erfindungsgemäßen Messeinrichtung mit einem Mehrgangpotentiometer, und
- Figur 5: eine vereinfachte schematische Darstellung einer erfindungsgemäßen Messeinrichtung mit einem optischen Sensor.

### Ausführliche Beschreibung der Zeichnungen

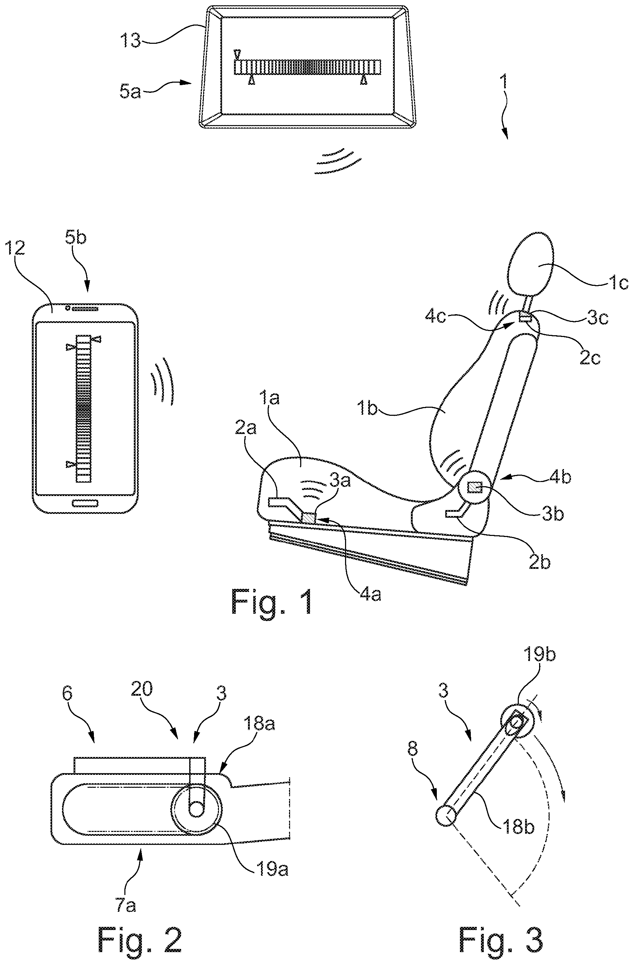

Gemäß Figur 1 weist die Sitzanordnung mit Sitzpositionserkennung und Memory-Funktion einen Sitz 1 auf, der aus mehreren relativ zueinander beweglichen Sitzteilen 1a, 1b, 1c besteht. Zum Verstellen der jeweiligen Sitzteils 1a, 1b, 1c sind jeweilige Verstelleinrichtungen 2a, 2b, 2c an den Sitzteilen 1a, 1b angeordnet. An den Verstelleinrichtungen 2a, 2c sind Messeinrichtungen 3a, 3c mit Senderelementen 4a, 4c angeordnet. Ferner ist an dem Sitzteil 2b ein Senderelement 4b angeordnet. Die Senderelemente 4a, 4b, 4c kommunizieren kabellos über Bluetooth mit zwei Empfängerelementen 5a, 5b, die als Smartphone 12 und On-Board-System 13 des - hier nicht dargestellten Fahrzeugs - ausgebildet sind.

Eine Betätigung der jeweiligen Verstelleinrichtungen 2a, 2b, 2c durch einen Fahrer startet eine Applikation im Smartphone 12 und im On-Board-System 13, wodurch auf einem Display die aktuelle Sitzposition des jeweiligen Sitzteils 1a, 1b, 1c angezeigt wird. Bei Erreichen einer optimalen Sitzposition des Fahrers, wird durch Bestätigung des Fahrers die optimale Sitzposition im Empfängerelement 5a, 5b eingespeichert. Ein weiterer Fahrer kann ebenso seine optimale Sitzposition wählen und in den Empfängerelementen 5a, 5b einspeichern. Die Anzahl der Speicherpositionen ist beliebig und nicht beschränkt. Die jeweiligen gespeicherten Sitzpositionen der jeweiligen Fahrer werden auf dem Display des Empfängerelements 5a, 5b angezeigt. Ferner wird auch die aktuelle Sitzposition angezeigt, wodurch ein schnelles und komfortables Einstellen der jeweiligen Sitzposition realisiert ist. Bei Erreichen der jeweiligen Sitzposition des jeweiligen Fahrers wir zusätzlich ein akustisches Signal von dem jeweiligem Empfängerelement 5a, 5b ausgegeben.

Gemäß Figur 2 weist die Messeinrichtung 3 ein Schiebepotenziometer 6 zur Ermittlung einer linearen Bewegung zwischen der Messeinrichtung 3 und einer Zahnstange 7a auf. Ein Verbindungselement 18a wird axial von einem drehenden Zahnrad 19a verschoben. Dazu bewegt sich ein Schleifer 20 und verursacht eine Veränderung des Widerstands des Schiebepotentiometers 6. Daraus lässt sich über die, an den - hier nicht dargestellten -Anschlüssen des Schiebepotentiometers 6 gemessene Spannungsveränderung, der von dem Zahnrad 19a zurückgelegte Weg und dadurch die entsprechende Sitzposition bestimmen.

Gemäß Figur 3 weist die Messeinrichtung 3 ein Drehpotenziometer 8 zur Ermittlung einer Drehbewegung zwischen der Messeinrichtung 3 und einem Zahnrad 19b auf. Während einer Kreisbewegung des Zahnrads 19b wird das Drehpotentiometer 8 von einem Verbindungselement 18b gedreht. Demzufolge verändert sich an den - hier nicht dargestellten - Anschlüssen des Drehpotentiometers 8 die gemessene Spannung und ermöglicht so die Bestimmung der Sitzposition.

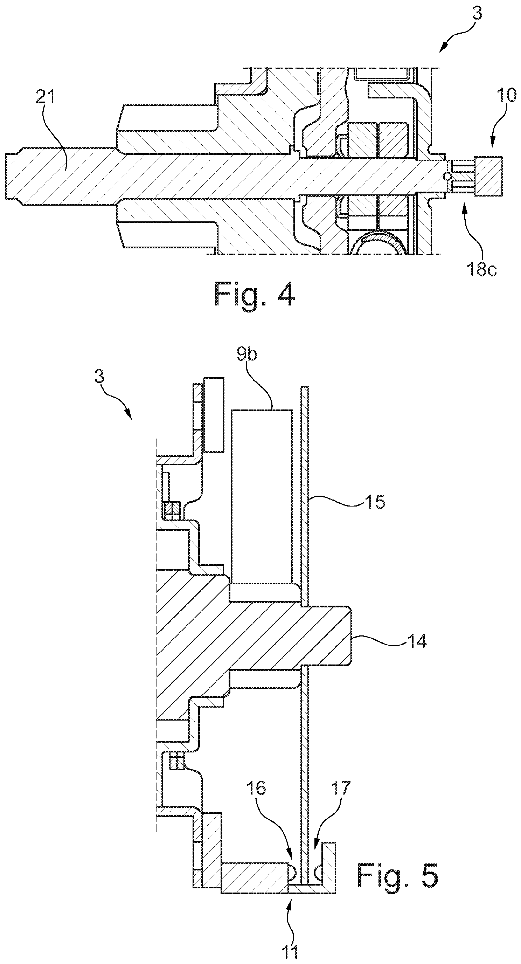

Gemäß Figur 4 weist die Messeinrichtung 3 ein Mehrgangpotenziometer 10 zur Ermittlung einer Rotation auf. Das Mehrgangpotentiometer 10 ist fest mit der Verstelleinrichtung 2 und mittels Verbindungselement 18c mit einer Welle 21 eines Moduls für die Sitzverstellung verbunden. Dabei verursacht die Rotation der Welle 21 eine Veränderung des Widerstands des Mehrgangpotentiometers 10. Demzufolge verändert sich an den - hier nicht dargestellten -Anschlüssen des Mehrgangpotentiometers 10 die gemessene Spannung, woraus sich die Sitzposition bestimmen lässt.

Nach Figur 5 weist die Messeinrichtung 3 einen optischen Sensor 11 zur Ermittlung einer Drehbewegung zwischen der Messeinrichtung 3 und einem Zahnsegment 9 auf. Dazu ist an einer rotierenden Welle 14 eine Inkrementalscheibe 15 angeordnet, die axial zwischen einer Lichtquelle 16 und einer Fotodiode 17 ein optisches Signal der Lichtquelle 16 auf die Fotodiode 17 erlaubt oder verhindert. Daraus lässt sich über die Anzahl der gewonnenen optischen Signale der zurückgelegte Weg bestimmen und somit die Sitzposition des jeweiligen Sitzteils 1a, 1b, 1c.

### Bezugszeichenliste

- 1: Sitz
- 1a-1c: Sitzteil
- 2a-2c: Verstelleinrichtung
- 3a-3c: Messeinrichtung
- 4a-4c: Senderelement
- 5a,5b: Empfängerelement
- 6: Schiebepotentiometer
- 7a, 7b: Zahnstange
- 8: Drehpotentiometer
- 9: Zahnsegment
- 10: Mehrgangpotentiometer
- 11: optischer Sensor
- 12: Smartphone
- 13: On-Board-System
- 14: rotierende Welle
- 15: Inkrementalscheibe
- 16: Lichtquelle
- 17: Fotodiode
- 18a-18c: Verbindungselement
- 19a 19b: Zahnrad
- 20: Schleifer
- 21: Welle

## Patentansprüche

1. Sitzanordnung mit Sitzpositionserkennung und Memory-Funktion für ein Fahrzeug,
umfassend einen Sitz (1), bestehend aus mehreren relativ zueinander beweglichen Sitzteilen (1a-1c), mit mindestens einer mechanischen Verstelleinrichtung (2) zur manuellen Verstellung einer Sitzposition eines Benutzers in eine individuell an den Benutzer angepasste Sitzposition,
ferner umfassend eine an die mindestens eine Verstelleinrichtung (2) oder an dem jeweiligen Sitzteil (1a-1c) angeordnete Messeinrichtung (3) zur Ermittlung der eingestellten Sitzposition des jeweiligen Sitzteils (1a-1c),
**dadurch gekennzeichnet, dass** die Messeinrichtung (3) ein Senderelement (4) zur kabellosen Übertragung der Sitzposition an ein damit verbundenes Empfängerelement (5) aufweist,
wobei das Empfängerelement (5) die individuell an den Benutzer angepasste Sitzposition abspeichert und wiedererkennt.

2. Sitzanordnung nach Anspruch 1,
**dadurch gekennzeichnet, dass** die Messeinrichtung (3) ein Schiebepotentiometer (6) zur Ermittlung einer linearen Bewegung zwischen der Messeinrichtung (3) und einer Zahnstange (7a) umfasst.

3. Sitzanordnung nach Anspruch 1,
**dadurch gekennzeichnet, dass** die Messeinrichtung (3) ein Drehpotentiometer (8) zur Ermittlung einer Drehbewegung zwischen der Messeinrichtung (3) und einem Zahnrad (19b) umfasst.

4. Sitzanordnung nach Anspruch 1,
**dadurch gekennzeichnet, dass** die Messeinrichtung (3) ein Mehrgangpotentiometer (10) zur Ermittlung einer Rotation umfasst.

5. Sitzanordnung nach Anspruch 1,
**dadurch gekennzeichnet, dass** die Messeinrichtung (3) mindestens einen optischen Sensor (11) zur Ermittlung einer linearen Bewegung zwischen der Messeinrichtung (3) und einer Zahnstange (7b) oder zur Ermittlung einer Drehbewegung zwischen der Messeinrichtung (3) und einem Zahnsegment (9) umfasst.

6. Sitzanordnung nach Anspruch 1,
**dadurch gekennzeichnet, dass** das Empfängerelement (5) ein Smartphone (12) ist.

7. Sitzanordnung nach Anspruch 1,
**dadurch gekennzeichnet, dass** das Empfängerelement (5) ein On-Board-System (13) des Fahrzeugs ist.

8. Sitzanordnung nach Anspruch einem der vorgehenden Ansprüche,
**dadurch gekennzeichnet, dass** das Empfängerelement (5) die Sitzposition zumindest beim Erreichen der im Empfängerelement (5) abgespeicherten individuell an den Benutzer angepassten Sitzposition graphisch und/oder akustisch ausgibt.

9. Verfahren zum Betrieb einer Sitzanordnung mit Sitzpositionserkennung und Memory-Funktion nach einem der Ansprüche 1 bis 8,
**dadurch gekennzeichnet, dass** die an der mindestens einen Verstelleinrichtung (2) oder an dem jeweiligen Sitzteil (1a-1c) angeordnete Messeinrichtung (3) beim Einstellen der individuell an den Benutzer angepassten Sitzposition die eingestellte Sitzposition des jeweiligen Sitzteils (1a-1c) ermittelt und über das Senderelement (4) kabellos an das damit verbundene Empfängerelement (5) überträgt, um die Sitzposition bei Bestätigung durch den Benutzer als individuell an den Benutzer angepasste Sitzposition im Empfängerelement (5) abzuspeichern.

10. Verfahren nach Anspruch 9,
**dadurch gekennzeichnet, dass** beim Verstellen des jeweiligen Sitzteils (1a-1c) und Erreichen der zuvor eingespeicherten individuell an den Benutzer angepassten Sitzposition ein akustisches und/oder optisches Signal vom Empfängerelement (5) ausgegeben wird.

## Claims

1. Seat assembly with seat position detection means and memory function for a vehicle,
comprising a seat (1) composed of a plurality of seat parts (1a-1c) which can move relative to one another, having at least one mechanical adjustment device (2) for manually adjusting a seat position of a user into a seat position which is adapted individually to the user,
also comprising a measuring device (3), arranged at the at least one adjustment device (2) or at the respective seat part (1a-1c), for determining the set seat position of the respective seat part (1a-1c),
**characterized in that** the measuring device (3) has a transmitter element (4) for the cableless transmission of the seat position to a receiver element (5) which is connected thereto,
wherein the receiver element (5) stores and detects again the seat position which is individually adapted to the user.

2. Seat assembly according to Claim 1,
**characterized in that** the measuring device (3) comprises a sliding potentiometer (6) for determining a linear movement between the measuring device (3) and a toothed rack (7a).

3. Seat assembly according to Claim 1,
**characterized in that** the measuring device (3) comprises a rotary potentiometer (10) for determining a rotational movement between the measuring device (3) and a gear wheel (19b).

4. Seat assembly according to Claim 1,
**characterized in that** the measuring device (3) comprises a multi-turn potentiometer (10) for determining rotation.

5. Seat assembly according to Claim 1,
**characterized in that** the measuring device (3) comprises at least one optical sensor (11) for determining a linear movement between the measuring device (3) and a toothed rack (7b) or for determining a rotational movement between the measuring device (3) and a tooth segment (9).

6. Seat assembly according to Claim 1,
**characterized in that** the receiver element (5) is a smartphone (12).

7. Seat assembly according to Claim 1,
**characterized in that** the receiver element (5) is an on-board system (13) of the vehicle.

8. Seat assembly according to one of the preceding claims,
**characterized in that** the receiver element (5) outputs the seat position graphically and/or acoustically at least when the seat position which is stored in the receiver element (5) and adapted individually to the user is reached.

9. Method for operating a seat assembly with seat position detection means and memory function according to one of Claims 1 to 8,
**characterized in that** the measuring device (3) which is arranged at the at least one adjustment device (2) or at the respective seat part (1a-1c) determines, during the setting of the seat position which is adapted individually to the user, the set seat position of the respective seat part (1a-1c) and transmits it in a cableless fashion via the transmitter element (4) to the receiver element (5) which is connected thereto, in order to store the seat position in the receiver element (5) as a seat position which is adapted individually to the user, when confirmation is provided by the user.

10. Method according to Claim 9,
**characterized in that** when the respective seat part (1a-1c) is adjusted and the seat position which has been previously stored and has been adapted individually to the user is reached, an acoustic and/or optical signal is output by the receiver element (5).

## Revendications

1. Ensemble formant assise à détection de la position d'assise et à fonction mémoire pour un véhicule,
comprenant un siège (1) constitué d'une pluralité de parties d'assise (1a-1c) mobiles les unes par rapport aux autres, comportant au moins un moyen de réglage mécanique (2) destiné au réglage manuel d'une position d'assise d'un utilisateur dans une position d'assise adaptée individuellement à l'utilisateur,
comprenant en outre un dispositif de mesure (3) disposé sur ledit au moins un moyen de réglage (2) ou sur la partie d'assise (1a-1c) respective pour la détermination de la position d'assise réglée de la partie d'assise (1a-1c) respective,
**caractérisé en ce que** le dispositif de mesure (3) comporte un élément émetteur (4) destiné au transfert sans fil de la position d'assise à un élément récepteur (5) relié à ce dernier,
dans lequel l'élément récepteur (5) met en mémoire la position d'assise adaptée individuellement à l'utilisateur et reconnaît cette dernière.

2. Ensemble formant assise selon la revendication 1,
**caractérisé en ce que** le dispositif de mesure (3) comprend un potentiomètre à curseur (6) pour la détermination d'un mouvement linéaire entre le dispositif de mesure (3) et une crémaillère (7a).

3. Ensemble formant assise selon la revendication 1,
**caractérisé en ce que** le dispositif de mesure (3) comprend un potentiomètre rotatif (8) pour la détermination d'un mouvement de rotation entre le dispositif de mesure (3) et une roue dentée (19b).

4. Ensemble formant assise selon la revendication 1,
**caractérisé en ce que** le dispositif de mesure (3) comprend un potentiomètre multitours (10) pour la détermination d'une rotation.

5. Ensemble formant assise selon la revendication 1,
**caractérisé en ce que** le dispositif de mesure (3) comprend au moins un capteur optique (11) pour la détermination d'un mouvement linéaire entre le dispositif de mesure (3) et une crémaillère (7b) ou pour la détermination d'un mouvement de rotation entre le dispositif de mesure (3) et un segment denté (9).

6. Ensemble formant assise selon la revendication 1,
**caractérisé en ce que** l'élément récepteur (5) est un téléphone intelligent (12).

7. Ensemble formant assise selon la revendication 1,
**caractérisé en ce que** l'élément récepteur (5) est un système embarqué (13) du véhicule.

8. Ensemble formant assise selon l'une des revendications précédentes,
**caractérisé en ce que** l'élément récepteur (5) délivre la position d'assise graphiquement et/ou acoustiquement, au moins lorsque la position d'assise mise en mémoire dans l'élément récepteur (5) et adaptée individuellement à l'utilisateur est atteinte.

9. Procédé de commande d'un ensemble formant assise à détection de la position de l'assise et à fonction mémoire selon l'une des revendications 1 à 8, **caractérisé en ce que** le dispositif de mesure (3), disposé au moins sur un moyen de réglage (2) ou sur la partie d'assise (1a-1c) respective, détermine la position d'assise réglée de la partie d'assise (1a-1c) respective lors du réglage de la position d'assise adaptée individuellement à l'utilisateur et la transfère sans fil par l'intermédiaire de l'élément émetteur (4) à l'élément récepteur (5) qui lui est relié, afin de mettre en mémoire la position d'assise dans l'élément récepteur (5) en tant que position d'assise individuellement adaptée à l'utilisateur après confirmation par l'utilisateur.

10. Procédé selon la revendication 9,
**caractérisé en ce qu'**un signal acoustique et/ou optique est délivré par l'élément récepteur (5) lorsque la partie d'assise (1a-1c) respective est réglée et que la position d'assise précédemment mémorisée et adaptée individuellement à la position d'assise de l'utilisateur, est atteinte.
